# EUROPÄISCHE PATENTSCHRIFT

(11) **EP 0 883 634 B1**
(45) Veröffentlichungstag und Bekanntmachung des Hinweises auf die Patenterteilung: **12.12.2001**
(21) Anmeldenummer: 97903336.2
(22) Anmeldetag: 19.02.1997
(51) Int. Cl.: C08G 12/04

(54) **VERFAHREN ZUR HERSTELLUNG VON HARNSTOFF-FORMALDEHYD-HARZEN**
PROCESS FOR PREPARING UREA-FORMALDEHYDE RESINS
PROCEDE DE PREPARATION DE RESINES UREE-FORMALDEHYDE

(30) Priorität: 27.02.1996 DE 19607252
(43) Veröffentlichungstag der Anmeldung: 16.12.1998
(73) Patentinhaber: Schöllhorn, Katrin, 67269 Grünstadt (DE); Hoffmann, Annette, 67269 Grünstadt (DE); Schöllhorn, Julia, 67269 Grünstadt (DE)
(72) Erfinder: SCHÖLLHORN, Wolf-Dietrich, D-67269 Grünstadt (DE)
(74) Vertreter: Geitz, Holger
(86) Internationale Anmeldenummer: EP9700805
(87) Internationale Veröffentlichungsnummer: WO9731957

(56) Entgegenhaltungen:
- EP-A- 0 066 233
- EP-A- 0 319 751
- FR-A- 1 132 426

## Beschreibung

Die vorliegende Erfindung betrifft ein neues Verfahren zur Herstellung von Harnstoff-Formaldehyd-Harzen.

Zum nächstkommenden Stand der Technik ist die europäische Patentschrift 0 319 751 zu nennen, die Harnstoff-Formaldehyd-Harze, deren Herstellung und deren Verwendung beschreibt.

Danach bezieht sich der Hauptpatentanspruch 1 der europäischen Patentschrit 0 319 751 auf ein stark exotherm härtendes Harnstoff-Formaldehyd-Harz, erhalten durch Kondensation von Harnstoff mit Formaldehyd in alkalischem Mileu, das dadurch erhältlich ist, daß man eine erste Kondensationsstufe I folgendermaßen durchführt:
a) Kondensation von 0,2 bis 0,7, vorzugsweise 0,5 Molen Harnstoff mit 1,2 bis 3 Molen, vorzugsweise 1,7 bis 2,2 Molen Formaldehyd in Form von festem Paraformaldehyd, in ausschließlich alaklischem Medium, bei einem sich einstellenden Anfangs pH-Wert von 8 - 12, vorzugsweise 9 - 11,
b) in Gegenwart von 1 bis 10 m Molen NaOH und 10 bis 80 m Molen NH₃ oder in Gegenwart von 2,5 bis 50 m Molen Guanidin-Base und 0 bis 80 m Molen NH₃ pro Mol Formalehyd,
c) bei einer Kondensations-Temperatur (I) von 90 bis 110°C,
d) bei einer Kondensationsdauer (I) von 10 bis 100 Minuten, vorzugsweise 15 bis 70 Minuten und daß man sodann eine zweite Kondensationsstufe II folgendermaßen duchführt:
e) Zugabe von weiteren 0,2 bis 0,7 vorzugsweise 0,5 Molen Harnstoff,
f) bei einer Kondensations-Temperatur (II) von 100 bis 120°C,
g) bei einer weiteren Kondensations-Dauer (II) von 1,5 bis 5 Stunden.

Dieses Verfahren des Standes der Technik zur Herstellung von stark exotherm härtenden Harnstoff-Formaldehyd-Harzen arbeitet in zwei Kondensationsstufen und eignet sich in hervorragender Weise für den Labor- bzw. Kleintechnikumsmaßstab, wobei die jeweiligen Ansatzgrößen ca. 100 kg betragen können.

Es wurde nun jedoch gefunden, daß nach diesem Verfahren des Standes der Technik im technischen, also im Tonnenbereich nicht oder zumindest nicht optimal verfahren werden kann, da die daraus resultierenden Harze für die Herstellung von hochwertigen Schaumprodukten nicht immer brauchbar sind.

Aufgabe der vorliegenden Erfindung ist es daher, das in der europäischen Patentschrift 0 319 751 beschriebene Verfahren sprunghaft zu verbessern, um im Tonnenmaßstab arbeiten zu können, wobei die nach vorliegender Erfindung hergestellten Harze für die Herstellung hochwertiger Schaumprodukte in gleicher Weise geeignet sind, wie sie nach dem Verfahren gemäß europäischer Patentschrift 0 319 751 im Labor- bzw. Technikumsmaßstab erhalten werden.

Die erfindungsgemäße Lösung der vorgenannten Aufgabe besteht darin, daß
a) Paraformaldehyd in fester Form vorgelegt und dieser auf 60 bis 120°C, vorzugsweise auf 80 bis 100°C erhitzt wird,
b) dem erhitzten Paraformaldehyd Harnstoff und gegebenenfalls Dicyandiamid, Melamin in entsprechende Molmenge zugesetzt und intensiv trocken vermischt und erhitzt werden, bis sich nach ca. 15 Minuten eine Temperatur von 80 bis 110°C, vorzugsweise von 85 bis 100°C einstellt,
c) der erhitzten Mischung methanolische Guanidinbase 32%ig im entsprechenden Molverhältnis zugesetzt werden und weiter erhitzt wird, wobei sich innerhalb von 10 Minuten die Mischung verflüssigt und sich trotz zugesetzter Heizenergie auf bis zu 65°C abkühlt und durch weitere Zufuhr von Heizenergie die Mischung bis zum Siedebereich von 103 bis 110°C erhitzt wird und in der ersten Kondensationsstufe kondensiert, wobei der Beginn der Kondensationszeit I ab einer Temperatur von 90°C willkürlich gesetzt wird, und die Kondensationszeit I 30 bis 100 Minuten, vorzugsweise 50 bis 85 Minuten beträgt,
d) nach Beendigung der Kondensationszeit I der siedenden Mischung eine zweite Menge Harnstoff und gegebenfalls Dicyandiamid in entsprechender Molverhältnis zugegeben und in einer zweiten Kondensationsstufe während 90 bis 180 Minuten bei einer sich einstellenden Kondensationstemperatur von 105 bis 120°C kondensiert,
e) nach Beendigung der Kondensationszeit II in der Siedehitze mit Milchsäure abgepuffert und das Harz während ca. 120 Minuten auf ca. 25°C abgekühlt wird.

Die eingesetzten Molmengen verändern sich im Prinzip nicht gegenüber der Literaturstelle des nächstkommenden Standes der Technik, nämlich der europäischen Patentschrift 0 319 750.

Das Wesen vorliegender Erfindung wird anhand der folgenden Ausführungsbeispiele, die bevorzugte Ausführungsformen darstellen, weiterhin erläutert.

### Ausführungsbeispiel I

1) 482 kg Paraformaldehyd werden vorgelegt und auf 90°C erhitzt.
2) 250 kg Harnstoff und
   30 kg Dicyandiamid werden zugesetzt und mit dem Paraformaldehyd intensiv vermischt und während 15 Minuten erhitzt auf ca. 90°C
3) 24 kg Methanol. Guanidinbase 32%ig werden zugesetzt und intensiv vermischt. Die Temperatur sinkt auf bis 65°C ab.
4) Ab erreichen von 90°C beginnt die Kondensationszeit I,Siedebereich ca. 10
5) 250 kg Harnstoff werden nach Kondensationszeit I, nämlich 75 Minuten, zugesetzt und gelöst. Die Temperatur sinkt auf ca. 90°C. Die Kondensationszeit II, nämlich 120 Minuten, läuft ab Zugabe des Harnstoffes. Es stellt sich ein Siedebereich von ca. 114 bis 110°C ein. Kondensationszeit II beträgt 120 Minuten.
6) 3,43 kg Milchsäure 85%ig werden zum Abpuffern in der Siedehitze benötigt.
7) Abkühlung des Harzes während ca. 120 Minuten auf ca. 25°C.

Das resultierende Harz weist eine Viskosität von 240 dPas bis 25°C auf.
Die Reaktivität beträgt 43°C.

### Ausführungsbeispiel II

1) 675 kg Paraformaldehyd werden vorgelegt und auf 90°C erhitzt.
2) 350 kg Harnstoff und
   Dicayndiamid werden zugesetzt und mit dem Paraformaldehyd intensiv vermischt und während 15 Minuten erhitzt auf ca. 90°C
3) 33,6 kg methanolische Guanidinbase 32%ig werden zugesetzt und intensiv vermischt. Die Temperatur sinkt auf bis 65°C ab.
4) Ab 90°C beginnt die Kondensationszeit I von 75 Minuten.
   Es stellt sich ein Siedebereich von 107 bis 103°C ein.
5) 360 kg Harnstoff werden nach Kondensationszeit I zugesetzt und gelöst. Die Temperatur sinkt auf ca. 90°C. Die Kondensationszeit II läuft ab Zugabe des Harnstoffes und beträgt 120 Minuten bei einer Kondensationstemperatur von 114 bis 110°C.
6) 4,8 kg Milchsäure 85%ig werden zum Abpuffern in der Siedehitze benötigt.
7) Abkühlung des Harzes während ca. 120 Minuten auf ca. 25°C.

Das Harz weist eine Viskosität von 145 dPas bei 25°C auf. Die Reaktivität beträgt 42°C.

Die Messung der Reaktivität erfolgt in der gleichen Weise, wie in der europäischen Patentschrift 0 139 751 beschrieben ist.

Die erfindungsgemäß hergestellten Harze eignen sich in hervorragender Weise zur Herstellung hochwertiger Schaumstoffe, wie in der europäischen Patentschrift 0 319 751 beschrieben.

Auch die Weiterverarbeitung erfolgt wie in dieser europäischen Patentschrift 0 319 751 beschrieben.

## Patentansprüche

1. Verfahren zur Herstellung eines stark exotherm härtenden Harnstoff-Formaldehyd Harzes, das durch Kondensation von Harnstoff mit Formaldehyd-Harz erhalten wird,
**dadurch gekennzeichnet, daß**
a) Paraformaldehyd in fester Form vorgelegt und dieser auf 60 bis 120 °C, vorzugsweise 80 bis 100 ° C, erhitzt wird,
b) dem erhitzten Paraformaldehyd Harnstoff und ggf. Dicyandiamid, Melamin in entsprechender Molmenge zugesetzt und intensiv trocken vermischt und erhitzt werden, bis sich nach ca. 15 Minuten eine Temperatur von 80 bis 110 ° C, vorzugsweise von 85 bis 100 ° C, einstellt,
c) der erhitzten Mischung methanolische Guanidinbase 32 %ig im entsprechenden Molverhältnis zugesetzt werden und weiter erhitzt wird, wobei sich innerhalb von 10 Minuten die Mischung verflüssigt und sich trotz zugesetzter Heizenergie auf bis zu 65 ° C abkühlt und durch weitere Zufuhr von Heizenergie die Mischung bis zum Siedebereich von 103 bis 110 ° C erhitzt wird und einer ersten Kondensationsstufe kondensiert, wobei der Beginn der Kondensationszeit I ab einer Temperatur von 90 ° C willkürlich gesetzt wird, und die Kondensationszeit I 30 bis 50 Minuten, vorzugsweise 50 bis 85 Minuten, beträgt,
d) nach Beendigung der Kondensationszeit I der siedenden Mischung eine zweite Menge Harnstoff und gegebenfalls Dicyandiamid in entsprechendem Molverhältnis zugegeben und in einer zweiten Kondensationsstufe während 90 bis 180 Minuten bei einer sich einstellenden Kondensationstemperatur von 105 bis 120 ° C kondensiert,
e) nach Beendigung der Kondensationszeit II in der Siedehitze mit Milchsäure abgepuffert und das Harz während ca. 120 Minuten auf ca. 25 ° C abgekühlt wird.

## Claims

1. Method of producing a urea-formaldehyde resin which hardens strongly exothermally and which is obtained by condensation of urea with formaldehyde resin, **characterised in that**
a) paraformaldehyde is provided in solid form and this is heated to 60 to 120° C, preferably 80 to 100° C,
b) urea and optionally also dicyandiamide and melamine are added in appropriate mol quantities to the heated paraformaldehyde and are intensively dryly intermixed and heated until after about 15 minutes a temperature of 80 to 110° C, preferably 85 to 100° C, sets in,
c) methanolic guanidine base of 32 percent are added in appropriate mol ratio to the heated mixture and the mixture is further heated, wherein within 10 minutes the mixture liquefies and cools down to 65° C notwithstanding added heat energy and the mixture is heated to the boiling range of 103 to 110° C by further feed of heating energy and condensed at a first condensation stage, wherein the start of the condensation time I is arbitrarily set at a temperature of 90°C and the condensation time I amounts to 30 to 50 minutes, preferably 50 to 85 minutes,
d) after conclusion of the condensation time I a second quantity of urea and optionally also dicyandiamide are added in appropriate mol ratio to the boiling mixture and the mixture is condensed in a second condensation stage for 90 to 180 minutes at a self-adjusting condensation temperature of 105 to 120° C and
e) after conclusion of the condensation time II it is buffered in the boiling heat with lactic acid and the resin is cooled down for 120 minutes to about 25° C.

## Revendications

1. Procédé de fabrication d'une résine urée-formaldéhyde durcissant d'une manière fortement exotherme, qui est obtenue par condensation d'urée avec de la résine de formaldéhyde, **caractérisé en ce que**
a) du paraformaldéhyde est présenté sous forme solide et celui-ci est chauffé à 60 jusqu'à 120°C, de préférence à 80 jusqu'à 100°C,
b) au paraformaldéhyde chauffé sont ajoutés de l'urée et le cas échéant du dicyandiamide, de la mélamine en une quantité molaire correspondante et sont mélangés intensément à sec et sont chauffés jusqu'à l'obtention, après environ 15 minutes d'une température de 80 à 110°C, de préférence de 85 à 100°C,
c) qu'on ajoute au mélange chauffé une base de guanidine méthylique à 32% selon un rapport molaire correspondant et qu'on continue à chauffer, où le mélange se liquéfie dans un laps de temps de 10 minutes et, malgré l'énergie de chauffage ajoutée, se refroidit jusqu'à 65°C et, par une amenée ultérieure d'énergie de chauffage, le mélange est chauffé jusqu'au domaine d'ébullition de 103 à 110°C et condense à un premier étage de condensation, où le début du temps de condensation I à partir d'une température de 90°C est établi arbitrairement, et le temps de condensation I est de 30 à 50 minutes, de préférence de 50 à 85 minutes,
d) après l'écoulement du temps de condensation I, il est ajouté au mélange bouillant une deuxième quantité d'urée et le cas échéant de dicyandiamide en un rapport molaire correspondant et que celui-ci condense lors d'une deuxième étape de condensation pendant 90 à 180 minutes à une température de condensation qui s'établit de 105 à 120°C,
e) après l'écoulement du temps de condensation II, on tamponne dans la chaleur d'ébullition avec de l'acide lactique, et la résine est refroidie pendant environ 120 minutes à environ 25°C.
